(19) Europäisches Patentamt
European Patent Office
Office européen des brevets

(11) EP 3 438 176 A1

(12) # EUROPEAN PATENT APPLICATION

published in accordance with Art. 153(4) EPC

(43) Date of publication:
**06.02.2019 Bulletin 2019/06**

(21) Application number: **17775562.6**

(22) Date of filing: **31.03.2017**

(51) Int Cl.:
***C08J 9/228*** *(2006.01)* ***C08G 63/672*** *(2006.01)*

(86) International application number:
**PCT/JP2017/013664**

(87) International publication number:
**WO 2017/171031 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.04.2016 JP 2016074479**

(71) Applicant: **Kaneka Corporation**
**Kita-ku,**
**Osaka 530-8288 (JP)**

(72) Inventor: **UCHIDA, Soichi**
**Settsu-shi**
**Osaka 566-0072 (JP)**

(74) Representative: **Vossius & Partner**
**Patentanwälte Rechtsanwälte mbB**
**Siebertstrasse 3**
**81675 München (DE)**

(54) **INJECTION-MOLDED FOAM OF RESIN COMPOSITION WITH SATISFACTORY SURFACE PROPERTY AND CAPABLE OF WEIGHT REDUCTION AND RIB DESIGN**

(57) An object of the present invention is to provide a molded article which provides lighter weight among thin-wall molding techniques for electric appliances such as mobile phones and computer housings and vehicle parts such as automobile fenders, door panels, backdoor panels, garnishes, pillars, and spoilers, and which further has good surface properties and rib design flexibility. The present invention provides a foam injection molded article of a resin composition, the resin composition containing: (A) a polycarbonate resin; (B) a thermoplastic polyester resin; (C) a polyester-polyether copolymer; and (D) a foaming agent, the foam injection molded article having a surface roughness as follows: 0.1 μm < arithmetic average roughness (Ra) < 9 μm, 1 μm < maximum height (Ry) < 90 μm, and 1 μm < 10-point average roughness (Rz) < 70 μm.

EP 3 438 176 A1

## Description

### TECHNICAL FIELD

The present invention relates to a foam injection molded article having light weight, good surface properties, and flexibility in the design of stiffening ribs.

### BACKGROUND ART

Polycarbonate resins are known as resins having the highest impact resistance among engineering plastics and good heat resistance. Owing to these advantages, they are used in various fields. However, they have drawbacks such as low chemical resistance, poor molding workability, and thickness-dependent impact strength.

Meanwhile, thermoplastic polyester resins have high chemical resistance and excellent molding workability, but have drawbacks such as low impact resistance and poor dimensional stability.

Various resin compositions have been proposed which utilize the advantages of these materials and compensate for their drawbacks. Yet, these resin compositions are insufficient to simultaneously satisfy impact resistance, heat resistance, chemical resistance, weather resistance, moldability, and other requirements of automotive parts and the like.

Resin compositions containing polycarbonate resins and polyester resins modified with, for example, polyethylene glycol or polytetramethylene glycol have also been suggested. Although such resin compositions have improved moldability, their heat resistance is insufficient for use in automotive exterior parts.

Other proposed resin compositions contain polycarbonate resins and polyester-polyether copolymers containing block units of polyalkylene glycol adducts of bisphenols. For example, Patent Literature 1 discloses a molded article having excellent transparency and solvent resistance formed from a composition containing 5 parts of a polyethylene terephthalate block copolymer containing 30% of a polyalkylene oxide adduct of bisphenol A having a molecular weight of 1000 and 95 parts of polycarbonate.

However, the composition of Patent Literature 1 is insufficient in moldability. According to Patent Literature 2, this is because, first, the polyester-polyether copolymer in the composition has a low degree of polymerization of the polyalkylene glycol adduct and thus provides an insufficient moldability improving effect; and secondly, the polyester-polyether copolymer is produced using an antimony compound as a catalyst which provides an adverse effect on the polycarbonate resin in the composition during molding. They also found that a resin composition mainly containing a polycarbonate resin and a specific polyester-polyether copolymer can have not only enhanced moldability but also improved mechanical characteristics.

Currently, there is a need to reduce the weight of electric appliances such as mobile phones and computer housings or vehicle parts such as automobile fenders, door panels, backdoor panels, garnishes, pillars, and spoilers to address environmental issues. Accordingly, attempts have been made to produce thinner molded products having a thickness of 2.0 to 2.5 mm, and it is easily expected that further weight reduction will be required in the future.

Further thickness reduction is required to achieve further weight reduction. However, when the thickness is thinner than 2.0 to 2.5 mm, it is impossible to adjust the rib thickness. If the rib is thicker, deformation will occur due to the difference in shrinkage between the rib and the molded article after molding, while if the rib is thinner, the reinforcing effect will be reduced, and it will be difficult to fill the flow end portion with the resin. In other words, with existing injection molding techniques, it is difficult from a product design standpoint to reduce weight by further thinning, regardless of what resin composition is used.

Meanwhile, foam injection molding has been employed to reduce the weight of automotive exterior parts. However, it is difficult to form a foam layer having uniform fine cells using polycarbonate alone. To solve this problem, Patent Literature 3 discloses a technique in which islands formed of a crystalline resin such as polyester, polyolefin, or polyamide having a size of 10 μm or less are dispersed in a sea of polycarbonate, and the dispersed particles are crystallized as nuclei to form fine foam cells starting from the islands during foaming by cooling after injection. However, since the extensional viscosity of the sea of polycarbonate resin during foaming is insufficient, the resin cannot withstand a high expansion ratio, and the weight reduction ratio thus remains less than 10%. Further, although the viscosity can be reduced by impregnation with a supercritical fluid, the resulting product fails to achieve an appearance suitable for automotive exterior parts. As described above, there is no injection molded article which can achieve weight reduction unachievable with conventional thin-wall molding or foam molding techniques using polymer alloys of polycarbonate and other crystalline resins, and which further has good surface properties and rib design flexibility.

CITATION LIST

PATENT LITERATURE

Patent Literature 1: JP H05-077704 B
Patent Literature 2: JP 2010-222393 A (JP 5434177 B)
Patent Literature 3: JP 2015-151461 A

SUMMARY OF INVENTION

TECHNICAL PROBLEM

An object of the present invention is to provide a molded article which provides lighter weight than thin-wall molding techniques for electric appliances such as mobile phones and computer housings and vehicle parts such as automobile fenders, door panels, backdoor panels, garnishes, pillars, and spoilers, and which further has good surface properties and rib design flexibility.

SOLUTION TO PROBLEM

As a result of extensive studies to solve the above problem, the present inventors have found that the above problem can be solved by a foam injection molded article of a resin composition that contains: (A) a polycarbonate resin; (B) a thermoplastic polyester resin; (C) a polyester-polyether copolymer; and (D) a foaming agent. This finding has led to the completion of the present invention.

Specifically, the present invention relates to a foam injection molded article of a resin composition, the resin composition containing: (A) a polycarbonate resin; (B) a thermoplastic polyester resin; (C) a polyester-polyether copolymer; and (D) a foaming agent, the foam injection molded article having a surface roughness as follows: 0.1 μm < arithmetic average roughness (Ra) < 9 μm; 1 μm < maximum height (Ry) < 90 μm; and 1 μm < 10-point average roughness (Rz) < 70 μm.

The present invention also relates to a method for producing a foam injection molded article, the method including: injecting a resin composition containing (A) a polycarbonate resin, (B) a thermoplastic polyester resin, (C) a polyester-polyether copolymer, and (D) a foaming agent into a mold that includes a stationary part and a movable part capable of moving forward and backward to any position and that has an initial cavity clearance $t_0$ of 1.8 mm or less; and after completion of the injection moving the movable part backward so that a cavity clearance after core-back process $t_f$ is 2.0 mm or more to foam the resin composition.

The present invention also relates to a resin composition for foam injection molding, containing: (A) a polycarbonate resin; (B) a thermoplastic polyester resin; (C) a polyester-polyether copolymer; and (D) a foaming agent.

The polyester-polyether copolymer (C) preferably contains a polyethylene terephthalate unit and a modified polyether unit represented by the following formula 6:

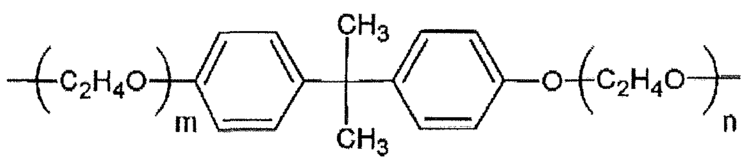

wherein m and n each represent the number of oxyalkylene repeating units; m and n are each an integer of 0 to 50; and $10 \leq m+n \leq 50$.

The foaming agent (D) is preferably a thermally expandable microcapsule or a physical foaming agent.

The foaming agent (D) is preferably a thermally expandable microcapsule.

The foaming agent (D) is preferably at least one selected from the group consisting of supercritical carbon dioxide and supercritical nitrogen.

The foam injection molded article is preferably obtained by injecting a resin composition into a mold that includes a stationary part and a movable part capable of moving forward and backward to any position and that has an initial cavity clearance $t_0$ of 1.8 mm or less, and after completion of the injection moving the movable part backward so that a cavity clearance after core-back process $t_f$ is 2.0 mm or more to foam the resin composition.

The thermoplastic polyester resin (B) is preferably a polyalkylene terephthalate resin.

The foam injection molded article preferably has a thickness of 2.0 to 6.0 mm.

The foam injection molded article preferably has a relative density of 0.3 to 1.2 g/cm$^3$.

## ADVANTAGEOUS EFFECTS OF INVENTION

The present invention provides weight reduction unachievable with conventional thin-wall molding or foam molding techniques and rib design flexibility.

## BRIEF DESCRIPTION OF DRAWINGS

Fig. 1 schematically shows a top view and a cross-sectional view of a cavity used in examples and comparative examples.

## DESCRIPTION OF EMBODIMENTS

Embodiments of the present invention are described below. The present invention is not limited to the description below.

### <Resin composition for foam injection molding>

The resin composition for foam injection molding of the present invention contains: (A) a polycarbonate resin; (B) a thermoplastic polyester resin; (C) a polyester-polyether copolymer; and (D) a foaming agent. The resin composition may further contain (E) an impact resistance improver and/or (F) a plate-like filler.

### <(A) Polycarbonate resin>

The polycarbonate resin (A) is a polycarbonate resin which is derived from a compound having two phenolic hydroxyl groups (hereinafter referred to as "divalent phenol") and which is usually obtained by a reaction between a divalent phenol and phosgene or between a divalent phenol and a diester carbonate.

Examples of the divalent phenol include biphenol, methylenebisphenol (bisphenol F), bis(4-hydroxyphenyl)sulfone (bisphenol S), and 2,2-bis(4-hydroxyphenyl)propane (bisphenol A). Among these, bisphenol A is suitable, but the divalent phenol is not limited thereto.

The molecular weight of the polycarbonate resin (A) is preferably 10000 to 60000, more preferably 10000 to 30000, on a number average molecular weight basis, in view of properties such as impact resistance, chemical resistance, and molding workability.

### <(B) Thermoplastic polyester resin>

The thermoplastic polyester resin (B) is a resin containing 90% by weight or more of a unit obtained by polycondensation of a dicarboxylic acid and a diol.

Examples of the thermoplastic polyester resin (B) include polyalkylene terephthalate resins such as polyethylene terephthalate, polypropylene terephthalate, and polybutylene terephthalate, and phthalic polyester resins. Among these, polyalkylene terephthalate resins are preferred, with polyethylene terephthalate or polybutylene terephthalate being more preferred, and polyethylene terephthalate being particularly preferred.

The amount of the thermoplastic polyester resin (B) per 100 parts by weight of the polycarbonate resin (A) is preferably 10 to 100 parts by weight, more preferably 20 to 70 parts by weight, particularly preferably 25 to 50 parts by weight. If the amount is less than 10 parts by weight, heat resistance tends to be reduced. If the amount is more than 100 parts by weight, the impact strength of the polycarbonate tends to be impaired.

The thermoplastic polyester resin (B) may be produced by, for example, a method in which a germanium compound is used as a catalyst, as described later for the polyester-polyether copolymer (C).

### <(C) Polyester-polyether copolymer>

The polyester-polyether copolymer (C) used in the present invention preferably contains an aromatic polyester unit and a polyether unit.

Examples of the polyether unit include those represented by the following formula 1, formula 2, formula 3, formula 4, and formula 5.

Formula 1

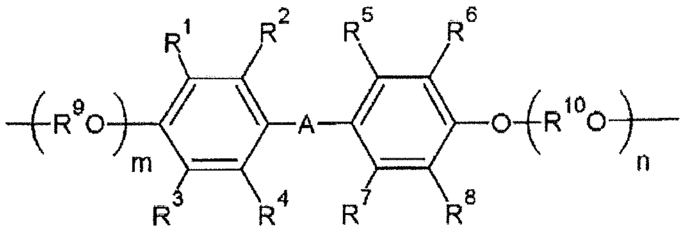

In formula 1, -A- is -O-, -S-, -SO-, -$SO_2$-, -CO-, a C1-C20 alkylene group, or a C6-C20 alkylidene group; $R^1$, $R^2$, $R^3$, $R^4$, $R^5$, $R^6$, $R^7$, and $R^8$ are each a hydrogen atom, a halogen atom, or a C1-C5 monovalent hydrocarbon group; $R^9$ and $R^{10}$ are each a C1-C5 divalent hydrocarbon group; and m and n each represent the number of oxyalkylene repeating units, m and n are each an integer of 0 to 70, and $10 \leq m+n \leq 70$.

Formula 2

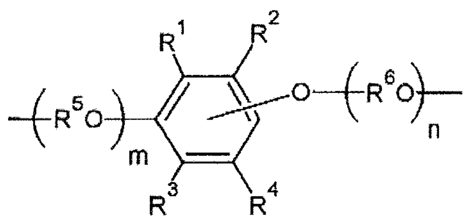

In formula 2, $R^1$, $R^2$, $R^3$, and $R^4$ are each a hydrogen atom, a halogen atom, or a C1-C5 monovalent hydrocarbon group; $R^5$ and $R^6$ are each a C1-C5 divalent hydrocarbon group; and m and n each represent the number of oxyalkylene repeating units, m and n are each an integer of 0 to 70, and $10 \leq m+n \leq 70$.

Formula 3

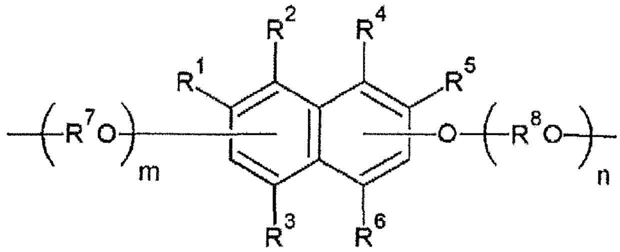

In formula 3, $R^1$, $R^2$, $R^3$, $R^4$, $R^5$, and $R^6$ are each a hydrogen atom, a halogen atom, or a C1-C5 monovalent hydrocarbon group; $R^7$ and $R^8$ are each a C1-C5 divalent hydrocarbon group; and m and n each represent the number of oxyalkylene repeating units, m and n are each an integer of 0 to 70, and $10 \leq m+n \leq 70$.

Formula 4

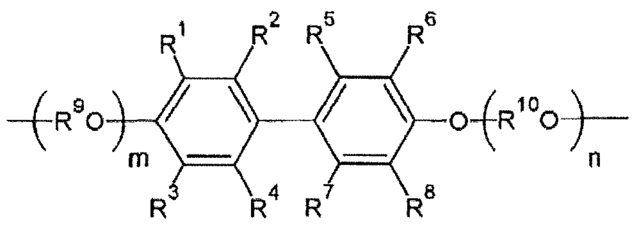

In formula 4, $R^1$, $R^2$, $R^3$, $R^4$, $R^5$, $R^6$, $R^7$, and $R^8$ are each a hydrogen atom, a halogen atom, or a C1-C5 monovalent hydrocarbon group; $R^9$ and $R^{10}$ are each a C1-C5 divalent hydrocarbon group; and m and n each represent the number of oxyalkylene repeating units, m and n are each an integer of 0 to 70, and $10 \leq m+n \leq 70$.

Formula 5

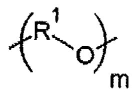

In formula 5, $R^1$ is a C1-C5 divalent hydrocarbon group; and m represents the number of oxyalkylene repeating units, and m is an integer of 2 to 70.

Preferred among these are those represented by the following formula 6.

Formula 6

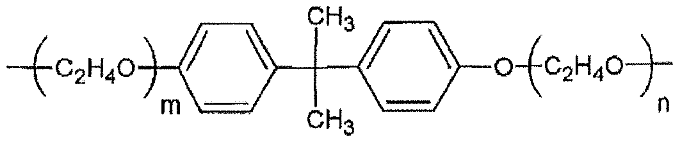

In formula 6, m and n each represent the number of oxyalkylene repeating units, m and n are each an integer of 0 to 50, and $10 \leq m+n \leq 50$.

The aromatic polyester unit is a product obtained by alternating polycondensation of an aromatic dicarboxylic acid or aromatic dicarboxylic acid ester and a diol.

Examples of the aromatic polyester unit include polyalkylene terephthalate units such as polyethylene terephthalate, polypropylene terephthalate, and polybutylene terephthalate; and polyalkylene naphthalate units such as polyethylene naphthalate, polypropylene naphthalate, and polybutylene naphthalate. Among these, polyalkylene terephthalate units are preferred, with a polyethylene terephthalate unit being more preferred.

Examples of the aromatic dicarboxylic acid include terephthalic acid, isophthalic acid, diphenyldicarboxylic acid, and diphenoxyethanedicarboxylic acid. Among these, terephthalic acid is preferred.

Examples of the aromatic dicarboxylic acid ester include dialkyl esters of the foregoing aromatic dicarboxylic acids.

In addition to the aromatic dicarboxylic acid, other aromatic oxycarboxylic acids such as oxybenzoic acid or aliphatic or alicyclic dicarboxylic acids such as adipic acid, sebacic acid, cyclohexane-1,4-dicarboxylic acid may be used in combination.

Examples of the diol include C2-C10 glycols such as ethylene glycol, trimethylene glycol, tetramethylene glycol, hexanediol, decanediol, and cyclohexanedimethanol.

As for the solution viscosity of the aromatic polyester, the inherent viscosity (IV value) is preferably 0.3 to 1.0 when measured at a concentration of 0.5 g/dl at 25°C in a 1/1 (weight ratio) phenol/tetrachloroethane mixed solvent, in view of impact resistance and chemical resistance of the resulting molded product and molding workability.

The method for producing the polyester-polyether copolymer (C) is not particularly limited. Examples include: (1) a direct esterification method in which an aromatic dicarboxylic acid, a diol, and a polyether are reacted; (2) a transesterification method in which an aromatic dicarboxylic acid dialkyl ester, a diol, and a polyether are reacted; (3) a method in which a modified polyether is added during or after transesterification of an aromatic dicarboxylic acid dialkyl ester with a diol to perform polycondensation; and (4) a method in which a high molecular aromatic polyester is mixed with a polyether and then transesterification is performed by melting under reduced pressure.

Examples of catalysts that can be used to produce the polyester-polyether copolymer (C) include germanium compounds and antimony compounds.

When an antimony compound is used as a catalyst, the antimony compound remaining in the polyester-polyether copolymer (C) may decompose the polycarbonate resin during melt-kneading or melt-molding, and the carbon dioxide generated by decomposition may cause silver streaks or bubbles in the appearance of the resulting molded article.

When a germanium compound is used as a catalyst, the germanium compound remaining in the polyester-polyether copolymer (C) has little potential to decompose the polycarbonate resin, and the resulting molded article will have good appearance.

Examples of the germanium compound include germanium oxides such as germanium dioxide, germanium

alkoxides such as germanium tetraethoxide and germanium tetraisopropoxide, germanium hydroxide and an alkali metal salts thereof, germanium glycolate, germanium chloride, and germanium acetate. These compounds may be used alone or in combinations of two or more. Among these germanium compounds, germanium dioxide is particularly preferred.

The concentration of the germanium compound to be introduced during polymerization is economically preferably 1000 ppm or less.

In the present invention, the amount of the polyester-polyether copolymer (C) per 100 parts by weight of the polycarbonate resin (A) is preferably 5 to 60 parts by weight, more preferably 10 to 50 parts by weight, still more preferably 20 to 40 parts by weight. If the amount is less than 5 parts by weight, it tends to be difficult to obtain a fluidity improving effect. If the amount is more than 60 parts by weight, mechanical characteristics such as heat resistance and impact strength may be impaired.

The polyester-polyether copolymer (C) used in the present invention preferably contains a polyalkylene terephthalate unit as an aromatic polyester unit, and a modified polyether unit represented by formula 1, formula 2, formula 3, or formula 4 as a polyether unit.

In addition, the polyester-polyether copolymer (C) more preferably contains a polyethylene terephthalate unit as an aromatic polyester unit, and a modified polyether unit of formula 1 as a polyether unit. When the polyester-polyether copolymer (C) contains a polyethylene terephthalate unit and a modified polyether unit of formula 1, m+n in formula 1 is 10 or more, preferably 20 or more, more preferably 25 or more, on a number average basis. If m+n is less than 10, thermal stability may not be much improved. At the same time, m+n is 70 or less, preferably 50 or less, more preferably 40 or less. If m+n is more than 70, fluidity may be reduced so that the resulting molded article may have poor surface properties.

Further, the polyester-polyether copolymer (C) particularly preferably contains a polyethylene terephthalate unit as an aromatic polyester unit, and a modified polyether unit represented by formula 6 as a polyether unit. When the polyester-polyether copolymer (C) contains a polyethylene terephthalate unit and a modified polyether unit of formula 6, m+n in formula 6 is 10 or more, preferably 20 or more, more preferably 25 or more, on a number average basis. If m+n is less than 10, thermal stability may not be much improved. At the same time, m+n is 50 or less, preferably 40 or less, more preferably 30 or less. If it is more than 50, fluidity may be reduced so that the resulting molded article may have poor surface properties.

As for the weight ratio of the aromatic polyester unit to the polyether unit, in view of the moldability improving effect and of maintaining heat resistance, the polyester-polyether copolymer preferably contains 50 to 90% by weight of the aromatic polyester unit and 10 to 50% by weight of the polyether unit, based on 100% by weight of the total weight of the copolymer. It more preferably contains 60 to 80% by weight of the aromatic polyester unit and 20 to 40% by weight of the polyether unit.

The inherent viscosity (IV value) of the polyester-polyether copolymer (C) used in the present invention is preferably 0.20 to 1.00, and more preferably more than 0.30 but less than 0.5. The inherent viscosity (IV value) is measured at 0.5 g/dl at 25°C in a 50/50 (weight ratio) tetrachloroethane/phenol mixed solvent.

<(D) Foaming agent>

The foaming agent (D) is preferably a chemical foaming agent, a physical foaming agent, or a thermally expandable microcapsule. It is more preferably a physical foaming agent or a thermally expandable microcapsule, particularly preferably a thermally expandable microcapsule, because with such foaming agents, for example, general extruders and injection molding machines can be safely used, uniform fine cells can be easily formed, and the resulting foam injection molded article has low surface roughness.

The chemical foaming agent is mixed with the resin in advance and then fed to an extruder or an injection molding machine where it decomposes in the cylinder to generate a gas such as carbon dioxide. Examples of the chemical foaming agent include inorganic chemical foaming agents such as sodium bicarbonate and ammonium carbonate, and organic chemical foaming agents such as azodicarbonamide and N,N'-dinitrosopentamethylenetetramine. These chemical foaming agents may be used alone or in admixture of two or more.

In view of workability, storage stability, and dispersibility, the inorganic chemical foaming agent is usually used in the form of a masterbatch containing a polyolefin or acrylic-butadiene-styrene copolymer as a matrix (the concentration of the foaming agent is 10 to 50% by weight).

The physical foaming agent is injected, as a gas or supercritical fluid, into the molten resin in the cylinder of an extruder or an injection molding machine where it disperses or dissolves in the resin. After injection into a mold, it functions as a foaming agent as the pressure in the mold is released. Examples of the physical foaming agent include aliphatic hydrocarbons such as propane and butane; alicyclic hydrocarbons such as cyclobutane and cyclopentane; halogenated hydrocarbons such as chlorodifluoromethane and dichloromethane; and inorganic gases such as nitrogen, carbon dioxide, and air. These physical foaming agents may be used alone or in admixture of two or more.

The thermally expandable microcapsule is a capsule-type foaming agent in which a low-boiling hydrocarbon

liquid is encapsulated in a thermoplastic polymer shell. It functions as a foaming agent as the capsule is expanded by the pressure of the low-boiling hydrocarbon vaporized by the heat in the cylinder of an extruder or an injection molding machine. Examples of thermally expandable microcapsules which may be suitably selected include those described in JP 2011-16884 A.

In view of workability, storage stability, and dispersibility, the thermally expandable microcapsule is usually used in the form of a masterbatch containing a polyolefin or acrylic-butadiene-styrene copolymer as a matrix (the concentration is 1 to 60% by weight).

The amount of alkaline substances in the thermally expandable microcapsule is preferably small to prevent decomposition of the main chain of resins including the polycarbonate resin and the polyester resin.

The alkaline substances are ion components derived from hydroxides (salts) of alkali metals or alkaline earth metals. Examples include Li, Na, Mg, K, Ca, and Ba. The concentration of the alkaline substances may suitably be 2000 ppm or less, more preferably 1000 ppm or less, still more preferably 800 ppm or less. If the concentration is more than 2000 ppm, the molecular weight of the polycarbonate may be reduced so that the resulting molded article may have lower strength.

The pH of the thermally expandable microcapsule is desirably neutral. The suitable pH range is 6.0 to 8.0, more preferably 6.5 to 7.5. The pH may be measured by a glass electrode method. In the glass electrode method, two electrodes (a glass electrode and a reference electrode) are used to detect a potential difference generated between the electrodes, which is then converted to a pH value.

The monomer component used to form the shell of the thermally expandable microcapsule may be, for example, a nitrile monomer, a (meth)acrylate monomer, an aromatic vinyl monomer, a diene monomer, a carboxyl group-containing vinyl monomer, or a monomer containing a reactive functional group (e.g. a methylol group, a hydroxyl group, an amino group, an epoxy group, or an isocyanate group). These monomers may be used alone or in combinations of two or more.

Examples of the nitrile monomer include acrylonitrile, methacrylonitrile, α-chloroacrylonitrile, α-ethoxyacrylonitrile, and fumaronitrile.

Examples of the (meth)acrylate monomer include methyl (meth)acrylate, ethyl (meth)acrylate, n-butyl (meth)acrylate, isobutyl (meth)acrylate, t-butyl (meth)acrylate, 2-ethylhexyl (meth)acrylate, stearyl (meth)acrylate, lauryl (meth)acrylate, phenyl (meth)acrylate, isobornyl (meth)acrylate, cyclohexyl (meth)acrylate, and benzyl (meth)acrylate.

Examples of the aromatic vinyl monomer include styrene, α-methylstyrene, vinyltoluene, t-butylstyrene, p-nitrostyrene, and chloromethylstyrene.

Examples of the diene monomer include butadiene, isoprene, and chloroprene.

Examples of the carboxyl group-containing vinyl monomer include unsaturated monocarboxylic acids such as acrylic acid, methacrylic acid, ethacrylic acid, crotonic acid, and cinnamic acid; unsaturated dicarboxylic acids such as maleic acid, itaconic acid, fumaric acid, citraconic acid, and chloromaleic acid; anhydrides of these unsaturated dicarboxylic acids; and unsaturated dicarboxylic acid monoesters such as monomethyl maleate, monoethyl maleate, monobutyl maleate, monomethyl fumarate, monoethyl fumarate, monomethyl itaconate, monoethyl itaconate, and monobutyl itaconate.

Moreover, examples of the monomer containing a reactive functional group (e.g. a methylol group, a hydroxyl group, an amino group, an epoxy group, or an isocyanate group) include N-methylol (meth)acrylamide, N,N-dimethylaminoethyl (meth)acrylate, N,N-dimethylaminopropyl (meth)acrylate, vinyl glycidyl ether, propenyl glycidyl ether, glycidyl (meth)acrylate, glycerol mono(meth)acrylate, 4-hydroxybutyl butyl methacrylate, 2-hydroxy-3-phenoxypropyl (meth)acrylate, p-hydroxystyrene, and blocked isocyanates derived from isocyanate compounds (e.g. diphenylmethane diisocyanate, hexamethylene diisocyanate, toluene diisocyanate, isophorone diisocyanate, and tolylene diisocyanate) blocked with phenol, alcohol, dimethyl malonate, diethyl malonate, ethyl acetoacetate, oxime, dimethylpyrazole, methyl ethyl ketone oxime, caprolactam, or other blocking agents.

The concentration of the carboxyl group in the shell is preferably 7 mmol/g or less, more preferably 5 mmol/g or less, still more preferably 3 mmol/g or less, particularly preferably 1 mmol/g or less, in order to inhibit decomposition of the resin components and improve the surface properties of the molded article. The lower limit of the concentration of the carboxyl group in the shell is preferably 0.001 mmol/g.

As for the foaming agent (D), the chemical foaming agent is preferably an inorganic chemical foaming agent because with such an inorganic chemical foaming agent, general extruders and injection molding machines can be safely used and uniform fine cells can be easily formed. The physical foaming agent is preferably an inorganic gas such as nitrogen, carbon dioxide, or air (e.g. supercritical carbon dioxide or supercritical nitrogen). The thermally expandable microcapsule is preferably one whose maximum expansion temperature matches the molding temperature of the resin.

A foaming aid such as an organic acid (e.g. citric acid) and/or a nucleating agent such as inorganic fine particles (e.g. talc or lithium carbonate) may be added, if necessary, to the foaming agent (D) in order to stably and uniformly form fine cells in the foam injection molded article.

The amount of the foaming agent (D) may be selected appropriately according to the expansion ratio of the final product, the type of the foaming agent, and the resin temperature during molding.

When the foaming agent (D) is a thermally expandable microcapsule, the amount of the foaming agent (D) per 100 parts by weight of the polycarbonate resin (A) is preferably at least 1 part by weight but not more than 20 parts by weight, more preferably at least 2 parts by weight but not more than 10 parts by weight, particularly preferably at least 3 parts by weight but not more than 6 parts by weight. The concentration of the foaming agent (D) in the composition is preferably 0.5 to 10% by weight, more preferably 1 to 5% by weight, particularly preferably 2 to 4% by weight, based on 100% by weight of the total weight of the resin composition. The use of the thermally expandable microcapsule in the range indicated above facilitates economic production of a foam injection molded article having uniform fine cells with an expansion ratio of 1.1 or more.

When the foaming agent (D) is a physical foaming agent, the amount of the foaming agent (D) per 100 parts by weight of the polycarbonate resin (A) is preferably at least 0.1 parts by weight but not more than 10 parts by weight, more preferably at least 0.5 parts by weight but not more than 5 parts by weight, particularly preferably at least 1.5 parts by weight but not more than 3 parts by weight. The concentration of the foaming agent (D) in the composition is preferably 0.1 to 7% by weight, more preferably 0.5 to 4% by weight, particularly preferably 1 to 3% by weight, based on 100% by weight of the total weight of the resin composition.

When the foaming agent (D) is a chemical foaming agent, the amount of the foaming agent (D) per 100 parts by weight of the polycarbonate resin (A) is preferably at least 1 part by weight but not more than 20 parts by weight, more preferably at least 2 parts by weight but not more than 10 parts by weight, particularly preferably at least 3 parts by weight but not more than 6 parts by weight. The concentration of the foaming agent (D) in the composition is preferably 0.5 to 10% by weight, more preferably 1 to 5% by weight, particularly preferably 2 to 4% by weight, based on 100% by weight of the total weight of the resin composition.

<(E) Impact resistance improver>

The resin composition may further contain (E) an impact resistance improver to further improve the impact resistance of the foam injection molded article of the present invention.

The impact resistance improver (E) is preferably at least one selected from the group consisting of a multi-graft polymer, a polyolefin polymer, an olefin-unsaturated carboxylic acid ester copolymer, and a thermoplastic polyester elastomer.

The multi-graft polymer preferably contains 10 to 90% by weight of at least one rubbery polymer selected from the group consisting of polybutadiene, a butadiene-styrene copolymer, a butadiene-acrylic acid ester copolymer, and polyorganosiloxane, and 10 to 90% by weight of a graft component including a polymer obtained by polymerizing at least one monomer selected from the group consisting of an aromatic vinyl compound, a vinyl cyanide compound, and a (meth)acrylic acid ester compound in the presence of the rubbery polymer.

The multi-graft polymer is obtained by graft polymerization of a rubbery elastic body with a vinyl compound. The rubbery elastic body preferably has a glass transition temperature of 0°C or lower, more preferably -40°C or lower. Specific examples of such rubbery elastic bodies include diene rubbers such as polybutadiene, butadiene-styrene copolymers, butadiene-acrylic acid ester copolymers, and butadiene-acrylonitrile copolymers; acrylic rubbers such as poly(butyl acrylate), poly(2-ethylhexyl acrylate), dimethylsiloxane-butyl acrylate rubber, and silicon/butyl acrylate composite rubber; olefin rubbers such as ethylene-propylene copolymers and ethylene-propylene-diene copolymers; polydimethylsiloxane rubbers; and dimethylsiloxane-diphenylsiloxane copolymer rubbers. Specific examples of the butadiene-acrylic acid ester copolymers include butadiene-butyl acrylate copolymers and butadiene-2-ethylhexyl acrylate copolymers. Polybutadiene, butadiene-styrene copolymers, and butadiene-butyl acrylate copolymers are preferred in view of impact resistance. Among the butadiene-butyl acrylate copolymer, copolymers containing 50 to 70% by weight of butyl acrylate and 30 to 50% by weight of butadiene are preferred in view of weather resistance and impact resistance.

The average particle size of the rubbery elastic body is not particularly limited, but it is preferably in the range of 0.05 to 2.00 μm, more preferably 0.1 to 0.4 μm. Moreover, the gel content is not particularly limited, but it is preferably in the range of 10 to 99% by weight, more preferably 80 to 96% by weight. It is particularly preferred to use a multi-graft polymer that is produced using an organic phosphorus emulsifier.

Examples of the vinyl compound to be used to produce the multi-graft polymer include aromatic vinyl compounds, vinyl cyanide compounds, acrylic acid esters, and methacrylic acid esters. These vinyl compounds may be used alone or in combinations of two or more. Particularly preferred examples of the aromatic vinyl compounds include styrene and α-methylstyrene. Particularly preferred examples of the vinyl cyanide compounds include acrylonitrile and methacrylonitrile. Particularly preferred examples of the acrylic acid esters include butyl acrylate and 2-ethylhexyl acrylate. Particularly preferred examples of the methacrylic acid esters include methyl methacrylate.

The ratio of the rubbery elastic body and the vinyl compound used to produce the core/shell graft polymer is preferably 90 to 10% by weight of the vinyl compound to 10 to 90% by weight of the rubbery elastic body, more preferably 15 to 70% by weight of the vinyl compound to 30 to 85% by weight of the rubbery elastic body. When the proportion of the rubbery elastic body is lower than 10% by weight, impact resistance is more likely to be reduced, while when it is

higher than 90% by weight, heat resistance tends to be reduced.

In view of properties such as impact resistance, heat resistance, stiffness, and moldability, the amount of the impact resistance improver (E) per 100 parts by weight of the polycarbonate resin (A) is preferably 1 to 20 parts by weight, more preferably 2 to 15 parts by weight, still more preferably 3 to 10 parts by weight.

<(F) Plate-like filler>

In order to reduce the coefficient of linear thermal expansion of the foam injection molded article, (F) a plate-like filler may be added to the resin composition.

Examples of the plate-like filler include alkaline inorganic materials mainly including silica or alumina in order to further disperse the components in the molded article. The plate-like filler is preferably at least one selected from the group consisting of mica, talc, montmorillonite, sericite, kaolin, glass flakes, plate-like alumina, and synthetic hydrotalcite. In view of the dimensional stability improving effect, it is more preferably mica, talc, montmorillonite, sericite, kaolin, or glass flakes. In view of the balance among impact resistance, fluidity, and product appearance, it is still more preferably mica, talc, or glass flakes, particularly preferably mica. The mica may be either naturally occurring mica or synthetic mica, and may also be muscovite, biotite, or phlogopite.

The shape of the plate-like filler may be a flat plate, flake, scale, or other shapes. The longitudinal length of the filler (the length of the longest straight line that can be contained within the filler) needs to be 0.1 to 40 μm on a number average basis. In view of low linear thermal expansion and surface appearance of the molded product, it is preferably 0.1 to 25 μm. The aspect ratio, i.e., the ratio of the longitudinal length of the filler to the thickness (the length of the straight line perpendicular to the largest plane including the longest straight line that can be contained within the filler) of the filler is preferably 10 or more, more preferably 15 or more, on a number average basis, in view of low linear thermal expansion and impact strength. The number average longitudinal length and the number average aspect ratio are the number averages of particles measured using a stereomicroscope.

In view of properties such as impact resistance, heat resistance, stiffness, and moldability, the amount of the plate-like filler (F) per 100 parts by weight of the polycarbonate resin (A) is preferably 1 to 40 parts by weight, more preferably 2 to 30 parts by weight.

<Foam injection molded article>

The foam injection molded article of the present invention is formed from a resin composition containing: (A) a polycarbonate resin; (B) a thermoplastic polyester resin; (C) a polyester-polyether copolymer; and (D) a foaming agent, and the foam injection molded article has a surface roughness as follows: 0.1 μm < arithmetic average roughness (Ra) < 9 μm; 1 μm < maximum height (Ry) < 90 μm; and 1 μm < 10-point average roughness (Rz) < 70 μm.

The arithmetic average roughness (Ra), the maximum height (Ry), and the 10-point average roughness (Rz) are parameters defined in JIS B 0601:1994. The parameters may be determined by a method in accordance with JIS B 0601:1994 using, for example, a surface property measuring device.

The arithmetic average roughness (Ra) is preferably 1 μm < arithmetic average roughness (Ra) < 7 μm, more preferably 2 μm< arithmetic average roughness (Ra) < 5 μm. If the arithmetic average roughness (Ra) is 9 μm or more, visible irregularities or wave patterns may be observed which may not be suited to the appearance requirements of automotive exterior applications.

The maximum height (Ry) is preferably 2 μm < maximum height (Ry) < 70 μm, more preferably 5 μm < maximum height (Ry) < 30 μm. If the maximum height (Ry) is 90 μm or more, visible irregularities or wave patterns may be observed which may not be suited to the appearance requirements of automotive exterior applications.

The 10-point average roughness (Rz) is preferably 2 μm < 10-point average roughness (Rz) < 60 μm, more preferably 5 μm < 10-point average roughness (Rz) < 30 μm. If the 10-point average roughness (Rz) is 70 μm or more, visible irregularities or wave patterns may be observed which may not be suited to the appearance requirements of automotive exterior applications.

In view of stiffness of the molded article, the thickness of the foam injection molded article is preferably 2.0 to 6.0 mm. If the thickness of the molded article is less than 2.0 mm, the molded article may have low bending stiffness. If the thickness of the molded article is more than 6.0 mm, the initial thickness needs to be increased correspondingly, which may not result in weight reduction; and an increased number of coarse voids other than the foam layer may be formed where more stress may be concentrated, resulting in reduced impact strength.

In view of weight reduction and impact strength of the molded article, the relative density of the foam injection molded article is preferably 0.3 to 1.2 $g/cm^3$. If the relative density of the molded article is less than 0.3 $g/cm^3$, an increased number of coarse cells larger than 1.5 mm tend to be formed, resulting in reduced impact strength. If the relative density is more than 1.2 $g/cm^3$, weight reduction cannot be achieved. The relative density may be calculated by a water displacement method in accordance with JIS K 7112:1999.

In view of weight reduction and impact strength, the expansion ratio of the foam injection molded article is preferably at least 1.1 but not more than 3, more preferably at least 1.1 but not more than 2.5, still more preferably at least 1.1 but not more than 2. If the expansion ratio is less than 1.1, it tends to be difficult to achieve weight reduction. If the expansion ratio is more than 3, surface impact strength tends to be significantly reduced. As used herein, the expansion ratio refers to a value obtained by dividing the thickness of the foam injection molded article (cavity clearance after core-back process $t_f$) by the initial cavity clearance $t_0$.

The foam injection molded article may be produced by per se known foam injection molding methods, and molding conditions may be adjusted appropriately according to the melt flow rate of the resin composition, the type of the foaming agent, the type of the molding machine, or the mold shape.

For example, the molding conditions may be as follows: resin temperature: 270°C to 310°C; mold temperature: 60°C to 90°C; molding cycle: 1 to 60 seconds; injection speed: 10 to 300 mm/sec; and injection pressure: 10 to 200 MPa, etc.

Among various methods for foaming in molds, preferred is a so-called core-back process (moving cavity method) which uses a mold including a stationary part and a movable part capable of moving forward and backward to any position, and in which after completion of injection of a resin composition, the movable part is moved backward to foam the resin composition, because this method facilitates production of a foam injection molded article that includes a non-foam layer formed on the surface and an internal foam layer having more uniform and finer cells and that is highly lightweight. The movable part may be moved backward in one step or in multiple steps (two or more steps). Moreover, the backward moving speed may be appropriately adjusted.

More specifically, a method for producing a foam injection molded article of the present invention as described later may be used.

The foam injection molded article of the present invention can be suitably used in applications such as electric appliances such as mobile phones and computer housings and vehicle parts such as automobile fenders, door panels, backdoor panels, garnishes, pillars, and spoilers.

<Method for producing foam injection molded article>

The method for producing the foam injection molded article of the present invention includes: injecting a resin composition containing (A) a polycarbonate resin, (B) a thermoplastic polyester resin, (C) a polyester-polyether copolymer, and (D) a foaming agent into a mold that includes a stationary part and a movable part capable of moving forward and backward to any position and that has an initial cavity clearance $t_0$ of 1.8 mm or less; and after completion of the injection moving the movable part backward so that the cavity clearance after core-back process $t_f$ is 2.0 mm or more to foam the resin composition.

The resin composition used in the foam injection molding may be the resin composition for foam injection molding of the present invention.

When the resin composition for foam injection molding of the present invention is used, owing to its excellent fluidity, the resin composition tends to exhibit excellent filling properties even when the mold clearance during injection is as thin as 2 . 5 mm or less. In view of weight reduction of the molded product, the mold clearance during injection, i.e., at the time of completion of injection, is preferably thin, and more preferably 2.5 mm or less, still more preferably 2.3 mm or less, yet still more preferably 2.0 mm or less, particularly preferably 1.8 mm or less.

In the present invention, when a chemical foaming agent or a physical foaming agent is used, preferably a so-called counter-pressure method is concurrently used in which a resin composition is introduced into a mold into which pressure is applied by an inert gas or the like in advance, because then surface appearance defects associated with silver streaks can be reduced.

EXAMPLES

The present invention is described in greater detail below with reference to examples, but the present invention is not limited thereto.

(Production Example 1)

A reaction vessel equipped with a stirrer and a gas outlet was charged with polyethylene terephthalate (IV value = 0.65) prepared with a germanium catalyst, Bisol 30EN (TOHO Chemical Industry Co., Ltd.), 400 ppm of germanium dioxide, and 2000 ppm of a stabilizer (Irganox 1010 available from Ciba Specialty Chemicals) (these ppm values are on the basis of the total amount of the polyethylene terephthalate and Bisol 30EN) . The mixture was maintained at 270°C for two hours, and then exposed to reduced pressure with a vacuum pump to perform polycondensation at 1 torr. Once the degree of polymerization reached a predetermined value, the pressure reduction was stopped to terminate

the reaction, and the resulting product was taken out, followed by cooling in a water bath. The cooled strands were simultaneously post-crystallized and dried in a hot air drier set at 100°C, followed by feeding into a mill to form pellets. Thus, a polyester-polyether copolymer (C1) in pellet form was prepared. The polyester-polyether copolymer (C1) had a polyether ratio of 30 wt% and an IV value of 0.45.

Bisol 30EN has a structure of formula 6 wherein m+n is 30 on a number average basis.

<Preparation of resin composition for foam injection molding>

(Raw materials)

(A1): Polycarbonate resin (S-2000 available from Mitsubishi Chemical Corporation)
(B1): Thermoplastic polyester resin (Bellpet EFG 70 (polyethylene terephthalate) available from Bell Polyester Products, Inc.)
(C1): Polyester-polyether copolymer described in Production Example 1
(E1): Butadiene-based core shell rubber (Kane Ace M732 available from Kaneka Corporation)
(F1): Mica (YM-21S available from Yamaguchi Mica Co., Ltd., number average particle size: 27 $\mu$m)

(Foaming agents)

(D1) Thermally expandable microcapsule (microspheres available from Kureha Corporation, special polyethylene masterbatch, S2640D/concentration: 40 wt%)
(D2) Supercritical carbon dioxide
(D3) Supercritical nitrogen
(D4) Sodium bicarbonate chemical foaming agent masterbatch (Polythlene EE204 available from Eiwa Chemical Ind. Co., Ltd., amount of decomposed gas: 80 ml/5 g)

As for the resin compositions for foam injection molding with (D1) or (D4), the materials listed in (Raw materials) and (Foaming agents) were dry-blended using the recipe indicated in Table 1 to prepare a resin composition for foam injection molding.

As for the resin compositions for foam injection molding with (D2) or (D3), an electric injection molding machine (Toyo Machinery & Metal Co., Ltd., Mucell series) with a mold clamping force of 180 t, a core-back mode, and a shut-off nozzle was used, in which a mixture of the raw materials other than the foaming agent was melt-kneaded at a cylinder temperature of 270°C and a back pressure of 10 MPa, and then (D2) or (D3) was injected into the molten resin in the cylinder so that it dispersed or dissolved in the resin to prepare a resin composition.

<Production of foam injection molded article>

As for the resin compositions for foam injection molding with (D1) or (D4), an electric injection molding machine (Ube Machinery Corporation Ltd.) with a mold clamping force of 350 t, a core-back mode, and a shut-off nozzle was used to perform melt-kneading at a cylinder temperature of 270°C and a back pressure of 10 MPa, followed by injection at an injection speed of 100 mm/sec into a mold set at 60°C. The mold included a stationary part and a movable part capable of moving forward and backward, and had a plate-like initial cavity with a size of 200 mm (length) $\times$ 200 mm (width) (clearance $t_0$ = 1.5 mm or 2.0 mm, rib thickness $t_r$ = 1.5 mm or 0.7 mm, rib height = 5 mm) as shown in Fig. 1 and a $\phi$ 8 mm direct gate at the center of the bottom. After completion of the injection, the movable part was moved backward so that the bottom portion had a desired thickness (expansion ratio) (or so that the clearance was a cavity clearance after core-back process $t_f$) to foam the resin composition in the cavity. After completion of the foaming, the foam injection molded article was cooled for 60 seconds and taken out. Table 1 shows the physical properties of the foam injection molded article.

In Examples 3 and 4 and Comparative Examples 1 and 2 using supercritical carbon dioxide (D2) or supercritical nitrogen (D3) as a physical foaming agent, an electric injection molding machine (Toyo Machinery & Metal Co., Ltd., Mucell series) with a mold clamping force of 180 t, a core-back mode, and a shut-off nozzle was used to inject the resin composition at the same cylinder temperature and mold temperature as in the other examples, followed by foaming in the same manner to produce an foam injection molded article.

The results show that the foam injection molded articles of the examples of the present invention were superior

to the comparative examples in fluidity, surface properties, weight reduction ratio, and rib design flexibility.

The test methods and criteria used in the evaluations in the examples and comparative examples are as follows.

(1) Surface roughness

Ultra-deep color 3D profile measurement microscopes (model VK-9500, VHX-5000 available from Keyence Corporation) were used to obtain surface 3D data of the foam injection molded articles. The arithmetic average roughness (Ra) (μm), the maximum height (Ry) (μm), and the 10-point average roughness (Rz) (μm) were calculated from the data in accordance with JIS B 0601:1994.

(2) Fluidity

With regard to filling of the cavity (clearance $t_0$) with the resin composition, successful filling without flow marks was rated A, or otherwise rated B. Unsuccessful filling was also rated B. The term "flow mark" refers to a phenomenon in which a tree-ring-like stripe pattern is generated on the surface of a molded article when the molten resin flowing in the mold cavity has insufficient fluidity.

(3) Expansion ratio

The expansion ratio was calculated by dividing the thickness of the plate-like foam injection molded article (cavity clearance after core-back process $t_f$) by the cavity clearance $t_0$ of the corresponding portion of the clamped mold.

(4) Relative density

The relative density was calculated by a water displacement method in accordance with JIS K 7112:1999.

(5) Weight reduction ratio

The weight reduction ratio of the molded articles was calculated from the following equation:

$$\{(\text{Weight of solid article}) - (\text{weight of foam molded article})\} / (\text{weight of solid article}) \times 100\ [\%].$$

The solid article represents a non-foamed molded article obtained by filling the mold having the cavity clearance $t_f$ with the resin composition used to produce the corresponding foam molded article.

(6) Cell conditions

The bottom portion of each plate-like foam injection molded article was cut along a centerline including the gate, and the cross section within the range of 30 mm to 60 mm from the gate was observed for the presence or absence of voids having a diameter of 1.5 mm or larger (coarse cells formed as a result, for example, of inside cells being connected) in the foam layer.

A: No voids observed.
B: Voids present.

(7) Rib design flexibility

A: The rib end was successfully filled, and no sink marks or deformation was observed on the side opposite to the side provided with ribs.
B: The rib end was unsuccessfully filled, or sink marks or deformation was observed on the side opposite to the side provided with ribs.

[Table 1]

| | | | Examples | | | | | | Comparative Examples | | | |
|---|---|---|---|---|---|---|---|---|---|---|---|---|
| | | | 1 | 2 | 3 | 4 | 5 | 6 | 1 | 2 | 3 | 4 |
| Composition | (A) | (A1) | 100 | 100 | 100 | 100 | 100 | 100 | 100 | 100 | 100 | 100 |
| | (B) | (B1) | 33 | 33 | 33 | 33 | 33 | 33 | 67 | 67 | 67 | 33 |
| | (C) | (C1) | 33 | 33 | 33 | 33 | 33 | 33 | | | | 33 |
| | (D) | (D1) | 5 | 5 | | | 5 | | | | | |
| | | (D2) | | | 2.0 | | | | 2.0 | | | |
| | | (D3) | | | | 1.3 | | | | 1.3 | | |
| | | (D4) | | | | | | 5 | | | 5 | |
| | (E) | (E1) | | | | | 8 | | | | | |
| | (F) | (F1) | | | | | 25 | | | | | |
| | Concentration of (D) in composition | | 2.9% | 2.9% | 1.2% | 0.8% | 2.5% | 2.9% | 1.2% | 0.8% | 2.9% | 0.0% |
| Evaluation of molded article | Surface roughness | Arithmetic average roughness (Ra) [μm] | 4 | 4 | 4 | 5 | 4 | 8 | 10 | 10 | 10 | 3 |
| | | Maximum height (Ry) [μm] | 25 | 25 | 40 | 45 | 30 | 85 | 90 | 90 | 90 | 20 |
| | | 10-point average roughness (Rz) [μm] | 20 | 20 | 30 | 40 | 25 | 65 | 75 | 75 | 75 | 18 |
| | Fluidity evaluation | | A | A | A | A | A | A | B | B | B | A |
| | Initial thickness [mm] ($t_0$) | | 1.5 | 1.5 | 1.5 | 1.5 | 1.5 | 1.5 | 1.5 | 1.5 | 1.5 | 2.0 |
| | Thickness of molded article [mm] ($t_f$) | | 2.0 | 2.5 | 2.0 | 2.0 | 2.5 | 2.0 | 2.0 | 2.0 | 2.0 | 2.0 |
| | Expansion ratio | | 1.33 | 1.67 | 1.33 | 1.33 | 1.67 | 1.33 | 1.33 | 1.33 | 1.33 | Non-foamed |
| | Relative density [g/cm$^3$] | | 0.95 | 0.75 | 0.95 | 0.95 | 0.83 | 0.95 | 0.95 | 0.95 | 0.95 | 1.26 |
| | Weight reduction ratio [%] | | 24 | 24 | 24 | 24 | 24 | 24 | 24 | 24 | 24 | 0 |
| | Cell condition evaluation | | A | A | A | A | A | A | A | A | A | - |
| | Rib design flexibility evaluation | | A | A | A | A | A | A | A | A | A | B |
| | Rib thickness [mm] ($t_r$) | | 1.5 | 1.5 | 1.5 | 1.5 | 1.5 | 1.5 | 1.5 | 1.5 | 1.5 | 0.7 |

REFERENCE SIGNS LIST

1 gate
2 rib

## Claims

1. A foam injection molded article of a resin composition, the resin composition containing:

   (A) a polycarbonate resin;
   (B) a thermoplastic polyester resin;
   (C) a polyester-polyether copolymer; and
   (D) a foaming agent,

   the foam injection molded article having a surface roughness as follows: 0.1 μm < arithmetic average roughness (Ra) < 9 μm; 1 μm < maximum height (Ry) < 90 μm; and 1 μm < 10-point average roughness (Rz) < 70 μm.

2. The foam injection molded article according to claim 1, wherein the polyester-polyether copolymer (C) contains a polyethylene terephthalate unit and a modified polyether unit represented by the following formula 6:

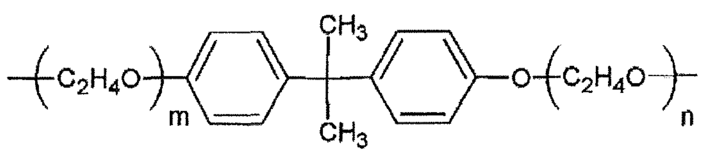

   wherein m and n each represent the number of oxyalkylene repeating units; m and n are each an integer of 0 to 50; and 10 ≤ m+n ≤ 50.

**3.** The foam injection molded article according to claim 1 or 2, wherein the foaming agent (D) is a thermally expandable microcapsule or a physical foaming agent.

**4.** The foam injection molded article according to claim 3, wherein the foaming agent (D) is a thermally expandable microcapsule.

**5.** The foam injection molded article according to claim 3, wherein the foaming agent (D) is at least one selected from the group consisting of supercritical carbon dioxide and supercritical nitrogen.

**6.** The foam injection molded article according to any one of claims 1 to 5, wherein the foam injection molded article is obtained by injecting a resin composition into a mold that includes a stationary part and a movable part capable of moving forward and backward to any position and that has an initial cavity clearance $t_0$ of 1.8 mm or less, and after completion of the injection moving the movable part backward so that a cavity clearance after core-back process $t_f$ is 2.0 mm or more to foam the resin composition.

**7.** The foam injection molded article according to any one of claims 1 to 6, wherein the thermoplastic polyester resin (B) is a polyalkylene terephthalate resin.

**8.** The foam injection molded article according to any one of claims 1 to 7, wherein the foam injection molded article has a thickness of 2.0 to 6.0 mm.

**9.** The foam injection molded article according to any one of claims 1 to 8, wherein the foam injection molded article has a relative density of 0.3 to 1.2 $g/cm^3$.

**10.** A method for producing a foam injection molded article, the method comprising:

injecting a resin composition containing (A) a polycarbonate resin, (B) a thermoplastic polyester resin, (C) a polyester-polyether copolymer, and (D) a foaming agent into a mold that includes a stationary part and a movable part capable of moving forward and backward to any position and that has an initial cavity clearance $t_0$ of 1.8 mm or less; and
after completion of the injection moving the movable part backward so that a cavity clearance after core-back process $t_f$ is 2.0 mm or more to foam the resin composition.

**11.** The method for producing a foam injection molded article according to claim 10, wherein the polyester-polyether copolymer (C) contains a polyethylene terephthalate unit and a modified polyether unit represented by the following formula 6:

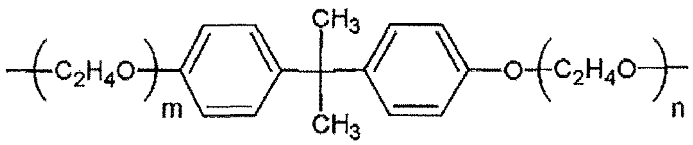

wherein m and n each represent the number of oxyalkylene repeating units; m and n are each an integer of 0 to 50; and $10 \leq m+n \leq 50$.

**12.** The method according to claim 10 or 11, wherein the foaming agent (D) is a thermally expandable microcapsule or a physical foaming agent.

**13.** The method according to claim 12, wherein the foaming agent (D) is a thermally expandable microcapsule.

**14.** The method according to claim 12, wherein the foaming agent (D) is at least one selected from the group consisting of supercritical carbon dioxide and supercritical nitrogen.

**15.** The method according to any one of claims 10 to 14,

wherein the thermoplastic polyester resin (B) is a polyalkylene terephthalate resin.

**16.** A resin composition for foam injection molding, comprising:

(A) a polycarbonate resin;
(B) a thermoplastic polyester resin;
(C) a polyester-polyether copolymer; and
(D) a foaming agent.

**17.** The resin composition for foam injection molding according to claim 16,
wherein the polyester-polyether copolymer (C) contains a polyethylene terephthalate unit and a modified polyether unit represented by the following formula 6:

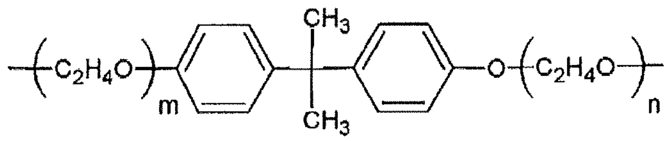

wherein m and n each represent the number of oxyalkylene repeating units; m and n are each an integer of 0 to 50; and $10 \leq m+n \leq 50$.

**18.** The resin composition for foam injection molding according to claim 16 or 17,
wherein the foaming agent (D) is a thermally expandable microcapsule or a physical foaming agent.

**19.** The resin composition for foam injection molding according to claim 18,
wherein the foaming agent (D) is a thermally expandable microcapsule.

**20.** The foam injection molded article according to claim 18,
wherein the foaming agent (D) is at least one selected from the group consisting of supercritical carbon dioxide and supercritical nitrogen.

**21.** The resin composition for foam injection molding according to any one of claims 16 to 20,
wherein the thermoplastic polyester resin (B) is a polyalkylene terephthalate resin.

FIG.1

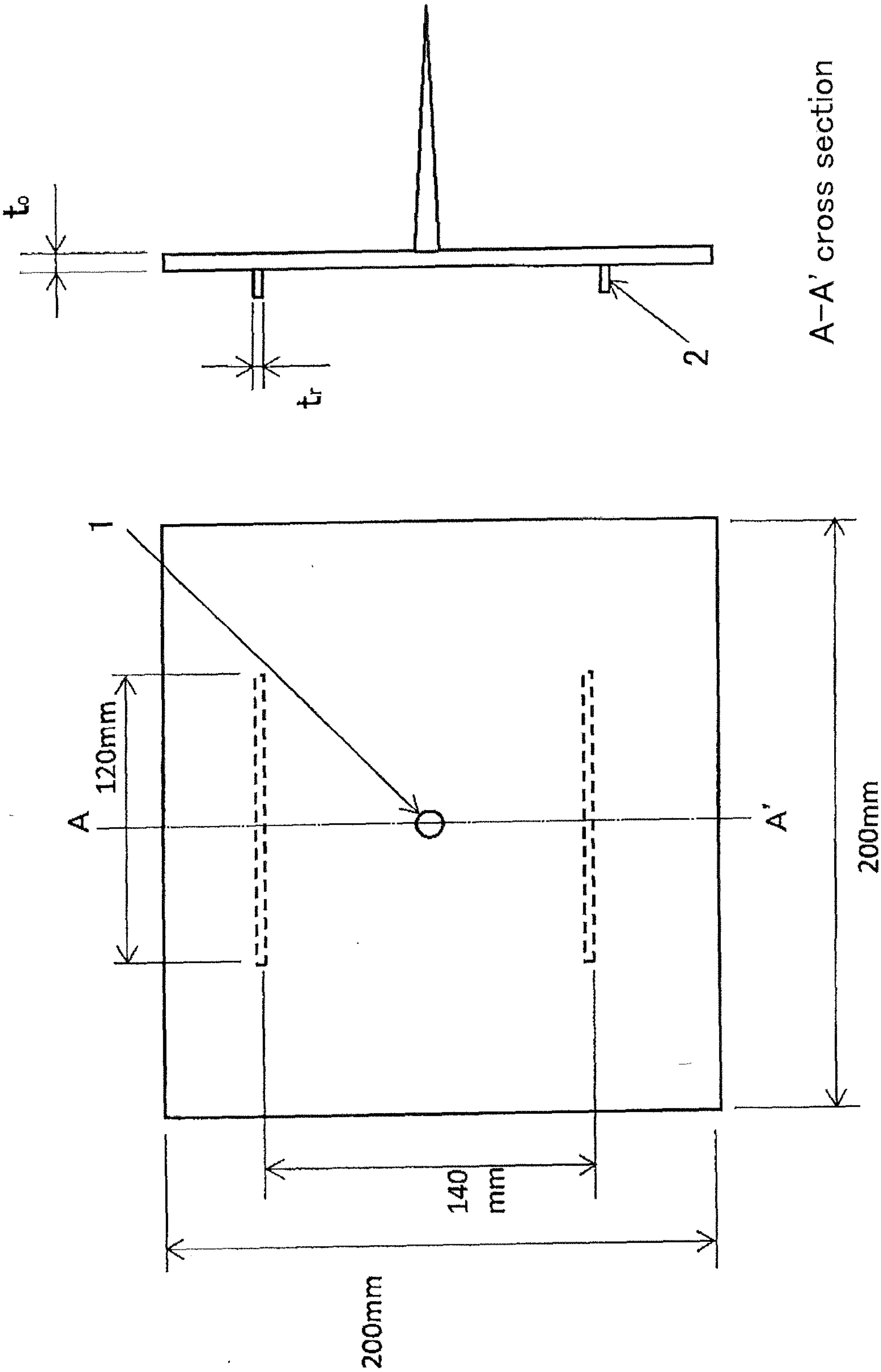

## INTERNATIONAL SEARCH REPORT

International application No.
PCT/JP2017/013664

A. CLASSIFICATION OF SUBJECT MATTER
*C08J9/228*(2006.01)i, *C08G63/672*(2006.01)n

According to International Patent Classification (IPC) or to both national classification and IPC

B. FIELDS SEARCHED

Minimum documentation searched (classification system followed by classification symbols)
C08J9/228, C08G63/672

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-12203 A (Toray Industries, Inc.), 20 January 2011 (20.01.2011), (Family: none) | 1-21 |
| A | JP 11-140210 A (Sekisui Plastics Co., Ltd.), 25 May 1999 (25.05.1999), (Family: none) | 1-21 |
| A | JP 60-170637 A (General Electric Co.), 04 September 1985 (04.09.1985), & US 4588754 A | 1-21 |
| A | JP 2008-75087 A (Kaneka Corp.), 03 April 2008 (03.04.2008), (Family: none) | 1-21 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 June 2017 (13.06.17) | 20 June 2017 (20.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H05077704 B
- JP 2010222393 A
- JP 5434177 B
- JP 2015151461 A
- JP 2011016884 A